# FASCICULE DE BREVET EUROPEEN

(11) **EP 1 065 469 B1**
(45) Date de publication et mention de la délivrance du brevet: **12.12.2007**
(21) Numéro de dépôt: 00401834.7
(22) Date de dépôt: 27.06.2000
(51) Int. Cl.: G01C 15/02

(54) **Dispositif repère-cible métrologique rétroréfléchissant**
Rückreflektierendes metrologisches Zielsystem
Retroreflecting metrological aiming device

(30) Priorité: 30.06.1999 FR 9908399
(43) Date de publication de la demande: 03.01.2001
(73) Titulaire: Regie Autonome des Transports Parisiens RATP, 75599 Paris Cedex 12 (FR); LABORATOIRE CENTRAL DES PONTS ET CHAUSSEES, 44341 Bouguenais (FR)
(72) Inventeur: Delmas, Jean-François, 91310 Linas (FR); Brouard, Christophe, 77610 Vernou La Celle S/Seine (FR); Benoit, Alain, 38510 Morestel (FR); Duranthon, Jean-Paul, 69150 Decines (FR)
(74) Mandataire: Jacobson, Claude

(56) Documents cités:
- WO-A-97/27453
- FR-A- 2 720 496
- FR-A- 2 747 466
- US-A- 4 926 563
- US-A- 5 062 753
- US-A- 5 771 099

## Description

L'invention concerne des dispositifs métrologiques rétroréfléchissants mis en oeuvre pour effectuer des mesures notamment de déformation sur des structures naturelles (sols, massifs rocheux) ou artificielles (ouvrages d'art, déblais, remblais).

De manière conventionnelle, les mesures métrologiques sur de telles structures sont effectuées au moyen de distancemètres à fils d'« Invar » (marque déposée). Elles impliquent, en résumé, d'implanter dans la structure dont on veut surveiller l'évolution dimensionnelle, des supports sur lesquels on monte de manière amovible des éléments d'accrochage de fils, de tendre des fils, au moyen d'un élément de réglage, dont on a accroché les extrémités à deux éléments d'accrochage respectifs, de mesurer compte tenu de la longueur des fils, les distances entre des points de référence des éléments d'accrochage, de retirer l'appareillage sauf les supports, et de répéter les opérations à chaque fois que l'on désire contrôler l'évolution dimensionnelle de la structure.

Ainsi, les supports sont ancrés à demeure dans la structure, tandis que les autres éléments de l'appareillage sont amovibles. Les éléments d'accrochage ont une structure telle que la simple connaissance de la distance entre les points d'accrochage respectifs de deux éléments entre lesquels sont tendus un ou plusieurs fils permet de déduire la distance entre les points de référence de ceux-ci, de sorte qu'en l'absence de déformation, les mesures soient reproductibles même à plusieurs années d'intervalle, et que les évolutions des distances mesurées rendent parfaitement compte des déformations de la structure. Afin que les mesures puissent être effectuées sur une large gamme de distances, des fils de longueur étalonnée peuvent être accrochés bout à bout ; afin de pouvoir obtenir une grande précision, on insère entre deux points de référence, un élément d'accrochage, un ou plusieurs fils, et un élément de réglage comprenant un tronçon de longueur ajustable mesurable et un tendeur étalonné ; ainsi, les fils sont tendus toujours avec la même tension ; comme ils sont en Invar, leur longueur est peu variable en fonction de la température. Ainsi, la distance entre les deux points de référence est égale à la somme des longueurs des fils tendus avec la tension appropriée, augmentée d'un côté de la longueur de l'élément de réglage, et de l'autre côté de la longueur de l'élément d'accrochage séparant le fil étalonné du point de référence correspondant, en ligne droite d'un point de référence à l'autre. Naturellement, la reproductibilité des mesures est liée à la nécessité que le point de référence soit toujours positionné de manière identique par rapport au support de l'élément d'accrochage, pour tous les supports.

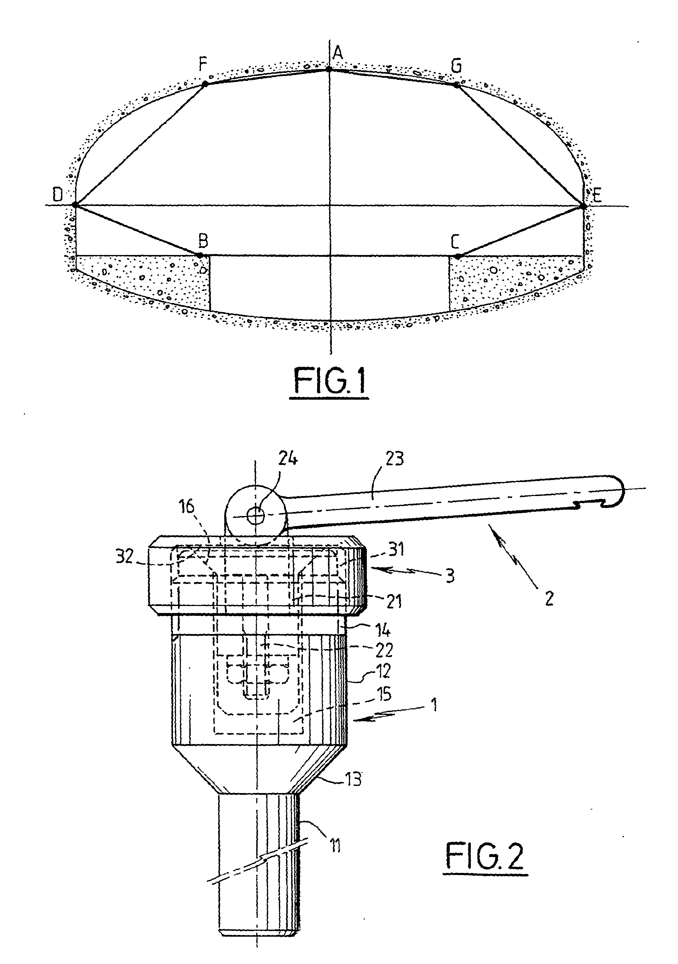

La figure 1 illustre la mise en oeuvre d'une surveillance au moyen de tels distancemètres en vue d'effectuer des mesures d'évolution de la section transversale de la voûte d'un tunnel, par exemple un tunnel ferroviaire d'une gare souterraine.

On a ancré ici, dans le plan de cette section transversale, sept supports pouvant porter chacun de manière amovible un élément d'accrochage ; un support A est ancré en clé de voûte, deux supports B et C sont ancrés symétriquement aux angles des quais surplombant les voies, deux supports D et E sont ancrés symétriquement sur les pieds droits de la voûte à un même niveau, et deux supports F et G sont ancrés symétriquement dans la voûte ou aux naissances, à un même niveau, entre les supports D et E respectivement et le support A de la clé de voûte.

Ici, des fils sont tendus respectivement entre B et D, D et F, F et A, A et G, G et E, E et C, C et B, et l'on a donc seulement sept distances mesurées ; avec sept supports, on peut théoriquement contrôler 21 distances, mais, dans la plupart des cas de ce type, le contrôle de 17 distances est suffisant pour donner une bonne image de l'évolution de la structure.

La figure 2 montre schématiquement un dispositif comportant un support 1 et un élément d'accrochage 2 connus, ainsi qu'un organe d'assemblage 3 au moyen duquel l'élément d'accrochage est fixé au support.

Le support 1 comporte, alignés le long d'un axe central, un pied d'ancrage 11 destiné à être fixé dans la structure dont l'évolution doit être contrôlée, et une tête réceptacle 12 destinée à porter, à l'extérieur de la structure, l'organe d'assemblage, reliés par une région de transition 13. Le pied d'ancrage peut présenter des saillies sur son pourtour pour augmenter la fiabilité de son ancrage dans la structure, par exemple des saillies s'étendant annulairement et se succédant longitudinalement ou encore un filetage de profil approprié s'il est de forme cylindrique (non représentés) ; l'ancrage peut être réalisé par un scellement à la résine ou au ciment expansif, par exemple. La tête 12 a une forme générale cylindrique et présente un filetage extérieur 14 pour permettre le vissage de l'organe d'assemblage 3 comportant à cette fin un filetage intérieur 31. La région de transition 13 est ici tronconique. La tête 12 comporte un logement 15 de forme générale cylindrique débouchant à l'extérieur, à l'extrémité libre du support opposée au pied 11, par un siège tronconique 16 constitué par un chanfrein dont l'angle est compris dans une gamme environ de 40° à 50°. De préférence, pour des raisons technologiques, le filetage extérieur 14 n'atteint pas cette extrémité libre du support, et dans la région de celle-ci, le diamètre extérieur du support est alors au plus égal au diamètre à fond de filet du filetage.

L'élément d'accrochage 2 est constitué de plusieurs pièces et comporte plus précisément une douille 21 ayant un corps de forme générale cylindrique destiné à être introduit dans le logement 15 et une collerette d'appui sur le siège tronconique 16. La douille 21 comporte un canal central dans lequel est logée une tige de fixation 22 pour un doigt d'accrochage 23 fixé à la tige extérieurement à la tête 12 de manière pivotante autour d'un pivot 24 s'étendant perpendiculairement à l'axe central longitudinal du support 1. La tige de fixation 22 présente, le long de sa région d'extrémité logée dans la tête 12, un filetage autour duquel est vissé un écrou de fixation de la tige à la douille, prenant appui contre une face de cette dernière par l'intermédiaire d'une rondelle. Le pivot 24 est logé dans un alésage s'étendant transversalement dans la région d'extrémité opposée de la tige de fixation 22 ; cette région de la tige de fixation présente un zone d'appui contre la face extérieure à la tête 12 de la collerette de la douille 21, afin que l'axe longitudinal du pivot 24 soit à une distance fixe de cette face extérieure de la collerette. Ainsi, le point d'intersection de l'axe du pivot 24 et de l'axe central longitudinal du support 1 auquel il est perpendiculaire constitue le point de référence de l'élément d'accrochage 2. On peut noter que grâce à ce montage, l'axe du pivot 24 peut être orienté dans n'importe quelle direction du plan parallèle à la face de la collerette extérieure à la tête 12 à une distance égale à celle qui sépare le point de référence de cette face, et que le doigt d'accrochage 23 peut être pivoté dans un plan vertical sur un angle au moins égal à 180° si sa forme extérieure est convenablement choisie. Le doigt d'accrochage 23 comporte à proximité de son extrémité opposée à son articulation autour du pivot 24, un crochet pour l'accrochage des fils en Invar.

L'organe d'assemblage 3 est réalisé sous la forme d'une bague formant écrou dont le filetage intérieur 31 coopère avec le filetage extérieur 14 du support 1 et comportant une surface interne 32 de serrage de la collerette contre la tête 12, la surface latérale de la collerette étant appliquée contre le siège tronconique 16 ; la surface extérieure de la bague peut être moletée pour faciliter son serrage.

Lorsque les éléments d'accrochage respectifs de deux dispositifs décrits ci-dessus sont reliés l'un à l'autre par des fils d'Invar et un élément de réglage, et ceux-ci sont alignés avec les doigts d'accrochage 23, la distance dont l'évolution est contrôlée est celle qui sépare les axes longitudinaux des deux pivots 24 respectifs des deux dispositifs.

Les mesures effectuées au moyen de cet appareil, répétées, sont fastidieuses et coûteuses, et il est souhaitable de mettre en oeuvre des moyens plus simples et plus rapides pour poursuivre l'étude de l'évolution des mêmes structures.

Cependant, les mesures effectuées jusqu'ici par d'autres techniques, notamment optiques, fournissent des résultats qu'on ne pourrait comparer avec ceux obtenus par l'appareillage qui vient d'être décrit qu'à la suite de corrections longues et délicates, voire impossible pratiquement à réaliser. Un dispositif utilisant des moyens optiques qui correspond à la première partie de la revendication 1 est décrit dans le document FR-A-2747466. Dans ce dispositif, un montage à cadran permet une rotation du cible autour de deux axes.

L'invention a pour but de remédier à ces inconvénients et de créer un appareillage de mesure optique qui, en l'absence d'évolution des structures contrôlées, donne les mêmes résultats de mesure que l'appareillage antérieur, afin d'éviter tout problème de continuité dans l'étude de l'évolution des structures contrôlées précédemment au moyen de cet appareillage antérieur.

A cette fin, l'invention concerne donc un dispositif repère-cible métrologique rétroréfléchissant comprenant un élément cible et un support pour cet élément cible, caractérisé en ce que le support comporte une tête réceptacle d'insertion de l'élément cible, cette tête réceptacle comportant un logement d'insertion de l'élément cible débouchant à l'extérieur par un siège tronconique évasé vers l'extérieur, et l'élément cible comporte une collerette présentant une surface latérale en couronne sphérique adaptée pour prendre appui de manière tangente contre le siège tronconique, et une plaquette s'étendant hors du support et se dressant perpendiculairement sur la collerette dans un plan équatorial d'une surface sphérique à laquelle appartient la surface latérale de la collerette en couronne sphérique, cette plaquette présentant deux faces planes parallèles dont au moins l'une est rétroréfléchissante ou recouverte d'un revêtement rétroréfléchissant et comportant un trou la traversant de part en part en étant centré sur un axe perpendiculaire aux faces de la plaquette et passant par le centre de ladite surface sphérique.

Grâce à cette structure, il est possible de réaliser un élément cible susceptible d'être inséré non seulement dans un support prévu spécialement pour lui mais également dans un support antérieur destiné primitivement à recevoir un élément d'accrochage de fil d'Invar, de réaliser des mesures au moyen d'un théodolite, et d'obtenir sur une même structure qui n'aurait pas subie de déformation, des résultats de mesure identiques, et ainsi de poursuivre le contrôle de l'évolution dimensionnelle de la structure sans résultats aberrants, ni interruption due au changement de la méthode de mesure.

Le dispositif selon l'invention peut de plus présenter une ou plusieurs des caractéristiques suivantes :
- le trou traversant la plaquette comporte au moins une région tronconique par laquelle il débouche à l'extérieur en s'évasant, pour l'optimisation de visées inclinées ;
- le trou traversant la plaquette comporte deux régions tronconiques par lesquelles il débouche à l'extérieur de part et d'autre de la plaquette en s'évasant, pour l'optimisation de visées inclinées ;
- les deux faces de la plaquette sont rétroréfléchissantes ou recouvertes d'un revêtement rétroréfléchissant ;
- le trou traversant la plaquette comporte au moins une région tronconique par laquelle il débouche à l'extérieur en s'évasant, l'inclinaison de la paroi de la région tronconique par rapport à l'axe sur lequel le trou est centré étant dans la gamme de 35° environ à 45° environ ;
- la plaquette se dresse sur une surépaisseur circulaire d'une face de la collerette ;
- l'élément cible comporte un corps de forme générale cylindrique relié à la collerette et adapté pour être inséré dans le logement de la tête réceptacle du support ;
- le support comporte un pied d'ancrage adapté pour être ancré dans une structure sur laquelle des mesures métrologiques doivent être effectuées ;
- il comporte un organe d'assemblage sous la forme d'une bague formant écrou comportant un filetage intérieur coopérant avec un filetage extérieur de la tête réceptacle du support et une surface interne de serrage de la collerette contre la tête ;
- la surface sphérique appartient à une sphère présentant un diamètre compris dans une gamme s'étendant environ de 25 mm à 35 mm.

D'autres caractéristiques et avantages de l'invention ressortiront de la description qui va suivre d'une forme de réalisation de l'invention donnée à titre d'exemple non limitatif, illustrée par les dessins joints dans lesquels :
- la figure 1 est un schéma montrant l'implantation de dispositifs métrologiques connus, pour effectuer des mesures dimensionnelles dans une structure constituée ici par un tunnel,
- la figure 2 est une vue schématique extérieure d'une forme de réalisation d'un dispositif métrologique connu,
- la figure 3 est une vue schématique de face d'un élément cible entrant dans la constitution d'un dispositif repère-cible selon l'invention, et
- la figure 4 est une vue schématique en coupe longitudinale partielle d'un repère-cible selon l'invention comprenant l'élément cible de la figure 3, celui-ci étant représenté de profil.

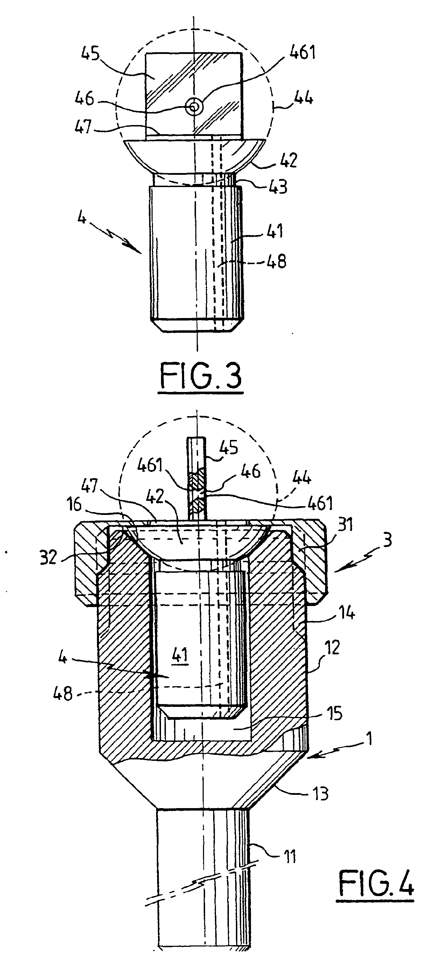

Sur les figures 3 et 4, les moyens identiques à des moyens de la figure 2 sont désignés par les mêmes références numériques.

Le dispositif repère-cible selon l'invention (représenté sur la figure 4) comporte comme le dispositif connu représenté sur la figure 2, un support 1, un élément adapté pour s'insérer dans le support 1 et un organe d'assemblage 3 au moyen duquel cet élément est fixé au support ; cependant, l'élément adapté pour s'insérer dans le support 1 n'est pas un élément d'accrochage de fil d'Invar, mais un élément cible 4 qui sera décrit dans la suite et qui est représenté sur la figure 3.

Comme celui de la figure 2, le support 1 du dispositif selon l'invention comporte, alignés le long d'un axe central, un pied d'ancrage 11 destiné à être fixé dans la structure dont l'évolution doit être contrôlée, et une tête réceptacle 12 destinée à porter, à l'extérieur de la structure, l'organe d'assemblage, reliés par une région de transition 13. Le pied d'ancrage peut présenter des saillies sur son pourtour pour augmenter la fiabilité de l'ancrage dans la structure, par exemple des saillies s'étendant annulairement et se succédant longitudinalement ou encore un filetage de profil approprié, cet ancrage pouvant être réalisé par un scellement à la résine ou au ciment expansif par exemple.

La tête 12 a une forme cylindrique et présente un filetage extérieur 14 pour permettre le vissage de l'organe d'assemblage 3 comportant à cette fin un filetage intérieur 31. La région de transition 13 est ici tronconique. La tête 12 comporte un logement 15 de forme générale cylindrique débouchant à l'extérieur, à l'extrémité libre du support opposée au pied 11, par un siège tronconique 16 constitué par un chanfrein dont l'angle est compris dans une gamme environ de 40 à 50°, c'est-à-dire dont l'angle au sommet est environ de 80° à 100°. De préférence, le filetage extérieur 14 n'atteint pas cette extrémité libre du support, et dans la région de cette extrémité, le diamètre extérieur du support est alors au plus égal au diamètre à fond de filet du filetage.

L'élément cible 4 comporte un corps 41 de forme générale cylindrique destiné à être inséré dans le logement 15 en étant ajusté glissant dans ce logement ou en présentant un léger jeu, et une collerette 42 d'appui sur le siège tronconique 16 raccordée au corps de préférence par une gorge 43 ; cette collerette 42 présente une surface latérale en couronne sphérique adaptée pour prendre appui de manière tangente contre le siège évasé vers l'extérieur, la couronne sphérique appartenant à une surface sphérique 44 d'une sphère ici fictive centrée sur l'axe central du support 1 qui est également celui du logement cylindrique 15 et du siège 16 ; sur la face de la collerette 42 qui est opposée à celle à partir de laquelle s'étend le corps 41 par l'intermédiaire de la gorge 43, se dresse perpendiculairement dans un plan équatorial de la surface sphérique 44, une plaquette 45 destinée à s'étendre, lorsque l'élément cible est inséré dans son support, hors de ce dernier.

La plaquette 45 présente deux faces planes parallèles dont au moins l'une est rétroréfléchissante ou munie d'un revêtement rétroréfléchissant pour constituer une surface de visée ; de préférence, les deux faces sont rétroréfléchissantes ou munies d'un revêtement rétroréfléchissant pour les rayonnements dans le visible ou proches du visible afin de constituer deux surfaces de visée ; elle comporte un trou 46 d'optimisation des visées la traversant de part en part en étant centré sur un axe perpendiculaire aux faces de la plaquette et à l'axe longitudinal du logement 15 et du siège 16, cet axe passant de plus par le centre de la surface sphérique 44. Ce trou 46 présente de préférence une section droite circulaire, sur toute sa longueur ; il peut comporter un tronçon central cylindrique, mais comporte au moins une région tronconique ou fraisure 461 par laquelle il débouche en s'évasant vers l'extérieur, pour l'optimisation des visées inclinées ; de préférence, il comporte deux régions tronconiques 461 par lesquelles il débouche à l'extérieur de part et d'autre de la plaquette 45 en s'évasant ; compte tenu de la faible épaisseur que présente généralement la plaquette, le trou ne comporte généralement pas de tronçon central cylindrique de longueur notable, et les deux régions tronconiques ou fraisures 461 sont raccordées par leur petite base.

Naturellement, l'éventuel revêtement rétroréfléchissant d'une face ou de chaque face, s'il est rapporté, est lui-même percé d'un trou dont la forme et les dimensions sont celles du trou de la plaquette dans la même zone ; avantageusement, le revêtement rétroréfléchissant est une feuille rétroréfléchissante adhésive.

L'inclinaison de la fraisure 461 par rapport à l'axe du trou est de préférence environ de 35° à 45°, pour faciliter les visées au moyen d'un théodolite.

La plaquette 45 se dresse sur une surépaisseur circulaire 47 de la face de la collerette 42 qui est opposée à celle à partir de laquelle s'étend le corps 41, dont le rôle sera exposé par la suite. L'épaisseur de la plaquette est de quelques millimètres, par exemple comprise entre environ 1 mm et 5 mm.

Pour un siège 16 qui s'étend entre un petit diamètre d'une vingtaine de millimètres et un grand diamètre d'une trentaine de millimètres, le diamètre de la sphère 44 est compris dans une gamme s'étendant environ de 25 millimètres à 35 millimètres.

Le corps 41, la gorge 43, la collerette 42 et sa surépaisseur, sont traversés de part en part par un canal 48 par exemple cylindrique facilitant l'insertion du corps 41 dans le logement 15 en permettant à l'air contenu dans celui-ci d'en être évacué au fur et à mesure de la progression du corps 41 dans le logement.

L'organe d'assemblage 3 est encore sous la forme d'une bague formant écrou dont le filetage intérieur 31 coopère avec le filetage extérieur 14 du support 1 et comportant une surface interne 32 de serrage de la collerette contre la tête 12, la surface sphérique de la collerette étant appliquée contre la surface tronconique du siège 16 de manière tangente à cette surface tronconique. Cette bague peut être moletée ou présenter des plats pour faciliter son serrage.

Les dimensions de la surépaisseur circulaire 47 de la collerette 42 sont adaptées pour permettre l'insertion de cette surépaisseur dans le trou central de la bague 3 entouré par la surface interne de serrage 32, avec un affleurement presque parfait de la face extérieure de la bague par rapport à la face de la surépaisseur qui porte la plaquette 45, ce qui permet d'utiliser toute la surface rétroréfléchissante de la plaquette lors des mesures effectuées perpendiculairement à cette surface.

Lorsque les éléments cibles respectifs de deux dispositifs décrits ci-dessus sont en place, la distance dont l'évolution est contrôlée est celle qui sépare les trous respectifs des éléments cibles, mesurée au moyen d'une technique optique par tachéomètre ou théodolite électronique à distancemètre à infra-rouge, par exemple ; une telle mesure est rapide même en présence d'un grand nombre de distances à mesurer, et se prête à un enregistrement automatique des résultats.

La structure qui vient d'être décrite permet de plus une interchangeabilité des éléments cibles selon l'invention avec des éléments d'accrochage connus et notamment des éléments appartenant aux dispositifs connus sous le nom de distancemètres orientables, en utilisant les mêmes supports ancrés dans la structure à mesurer, et en obtenant les mêmes résultats.

## Revendications

1. Dispositif repère-cible métrologique rétroréfléchissant comprenant un élément cible (4) et un support (1) pour cet élément cible, l'élément cible comportant une plaquette (45) s'étendant hors du support et présentant deux faces planes parallèles dont au moins l'une est rétroréfléchissante ou recouverte d'un revêtement rétroréfléchissant et le support comportant une tête réceptacle (12) d'insertion de l'élément cible, cette tête réceptacle comportant un logement (15) d'insertion de l'élément cible**, caractérisé en ce que** le logement (15) débouche à l'extérieur par un siège tronconique (16) évasé vers l'extérieur, et l'élément cible comporte une collerette (42) présentant une surface latérale en couronne sphérique adaptée pour prendre appui de manière tangente contre le siège tronconique, et la plaquette se dresse perpendiculairement sur la collerette dans un plan équatorial d'une surface sphérique (44) à laquelle appartient la surface latérale de la collerette en couronne sphérique et comporte un trou (46) la traversant de part en part en étant centré sur un axe perpendiculaire aux faces de la plaquette et passant par le centre de ladite surface sphérique.

2. Dispositif selon la revendication 1, **caractérisé en ce que** le trou (46) traversant la plaquette (45) comporte au moins une région tronconique (461) par laquelle il débouche à l'extérieur en s'évasant, pour l'optimisation de visées inclinées.

3. Dispositif selon la revendication 1, **caractérisé en ce que** le trou (46) traversant la plaquette comporte deux régions tronconiques (461) par lesquelles il débouche à l'extérieur de part et d'autre de la plaquette en s'évasant, pour l'optimisation de visées inclinées.

4. Dispositif selon la revendication 1, **caractérisé en ce que** les deux faces de la plaquette (45) sont rétroréfléchissantes ou recouvertes d'un revêtement rétroréfléchissant.

5. Dispositif selon la revendication 1, **caractérisé en ce que** le trou (46) traversant la plaquette (45) comporte au moins une région tronconique (461) par laquelle il débouche à l'extérieur en s'évasant, l'inclinaison de la paroi de la région tronconique par rapport à l'axe sur lequel le trou est centré étant dans la gamme de 35° environ à 45° environ.

6. Dispositif selon la revendication 1, **caractérisé en ce que** la plaquette (45) se dresse sur une surépaisseur circulaire (47) d'une face de la collerette (42).

7. Dispositif selon la revendication 1, **caractérisé en ce que** l'élément cible comporte un corps (41) de forme générale cylindrique relié à la collerette et adapté pour être inséré dans le logement (15) de la tête réceptacle (12) du support (1).

8. Dispositif selon la revendication 1, **caractérisé en ce que** le support (1) comporte un pied d'ancrage (11) adapté pour être ancré dans une structure sur laquelle des mesures métrologiques doivent être effectuées.

9. Dispositif selon la revendication 1, **caractérisé en ce qu'**il comporte un organe d'assemblage (3) sous la forme d'une bague formant écrou comportant un filetage intérieur (31) coopérant avec un filetage extérieur (14) de la tête réceptacle (12) du support (1) et une surface interne (32) de serrage de la collerette contre la tête (12).

10. Dispositif selon la revendication 1, **caractérisé en ce que** la surface sphérique (44) appartient à une sphère présentant un diamètre compris dans une gamme s'étendant environ de 25 mm à 35 mm.

## Claims

1. Retroreflective metrological target marker device comprising a target member (4) and a support (1) for said target member, the target member comprising a plate (45) which extends out of the support and has two parallel planar faces, at least one of which is retroreflective or is covered with a retroreflective coating, and the support comprising a receptacle head (12) in which the target member can be inserted, said receptacle head comprising a recess (15) for inserting the target member, **characterised in that** the recess (15) opens to the exterior by way of a socket (16) in the shape of a truncated cone which becomes wider towards the exterior, the target member comprises a flange (42) having a spherical annular lateral surface adapted to abut the truncated cone-shaped socket in a tangential manner and the plate stands in a perpendicular manner on the flange in an equatorial plane of a spherical surface (44) to which the lateral surface of the spherical annular flange belongs, the plate comprising a hole (46) which passes completely through said plate, is centred on an axis perpendicular to the faces of the plate and passes through the centre of said spherical surface.

2. Device according to claim 1, **characterised in that** the hole (46) passing through the plate (45) comprises at least a truncated cone-shaped region (461), by way of which it opens to the exterior in a widening fashion in order to optimise inclined sightings.

3. Device according to claim 1, **characterised in that** the hole (46) which passes through the plate comprises two truncated cone-shaped regions (461) by way of which it opens to the exterior in a widening fashion on both sides of the plate in order to optimise inclined sightings.

4. Device according to claim 1, **characterised in that** the two faces of the plate (45) are retroreflective or are covered with a retroreflective coating.

5. Device according to claim 1, **characterised in that** the hole (46) which passes through the plate (45) comprises at least a truncated cone-shaped region (461) by way of which it opens to the exterior in a widening fashion, the inclination of the wall of the truncated cone-shaped region being in the range of from approximately 35° to approximately 45° in relation to the axis on which the hole is centred.

6. Device according to claim 1, **characterised in that** the plate (45) stands on a circular portion (47) of increased thickness of a face of the flange (42).

7. Device according to claim 1, **characterised in that** the target member comprises a generally cylindrical body (41) which is connected to the flange and adapted to be inserted in the recess (15) of the receptacle head (12) of the support (1).

8. Device according to claim 1, **characterised in that** the support (1) comprises an anchoring foot (11) adapted to be anchored in a structure on which metrological measurements are intended to be carried out

9. Device according to claim 1, **characterised in that** it comprises an assembly element (3) in the form of a nut-forming ring comprising an internal thread (31) mating with an external thread (14) of the receptacle head (12) of the support (1) and an internal surface (32) for clamping the flange against the head (12).

10. Device according to claim 1, **characterised in that** the spherical surface (44) belongs to a sphere having a diameter in the range of from 25 mm to 35 mm.

## Patentansprüche

1. Rückreflektierendes metrologisches Zielsystem mit einem Zielscheibenelement (4) und einem Träger (1) für dieses Zielscheibenelement, wobei das Zielscheibenelement eine Scheibe (45) aufweist, die aus dem Träger herausragt und zwei planparallele Flächen bildet, von denen mindestens eine rückreflektierend ist oder eine rückreflektierende Beschichtung aufweist, und der Träger einen Aufnahmekopf (12) zum Einstecken des Zielscheibenelements aufweist, welcher Aufnahmekopf eine Aufnahme (15) zum Einstecken des Zielscheibenelements aufweist, **dadurch gekennzeichnet, daß** die Aufnahme (15) sich nach außen in einen kegelstumpfförmigen Sitz (16) öffnet, der sich nach außen erweitert, das Zielscheibenelement einen Kragen (42) aufweist, der eine kugelkalottenförmige seitliche Oberfläche hat, die dazu angepaßt ist, sich tangentenförmig an den kegelstumpfförmigen Sitz anzulehnen, und die Scheibe sich rechtwinklig zu dem Kragen in einer Äquatorialebene einer Kugelfläche (44) erstreckt, die die kugelkalottenförmige seitliche Oberfläche des Kragens enthält, und die Scheibe ein Loch (46) aufweist, das von einer Seite zur anderen durchgeht und auf eine zu den Flächen der Scheibe senkrechte und durch die Mitte der genannten Kugelfläche hindurchgehende Achse zentriert ist.

2. System nach Anspruch 1, **dadurch gekennzeichnet, daß** das durch die Scheibe (45) hindurchgehende Loch (46) wenigstens einen kegelstumpfförmigen Bereich (461) hat, über den es sich nach außen öffnet, indem es sich erweitert, um schräge Peilungen zu optimieren.

3. System nach Anspruch 1, **dadurch gekennzeichnet, daß** das durch die Scheibe (45) hindurchgehende Loch (46) zwei kegelstumpfförmige Bereiche (461) aufweist, mit denen es sich auf beiden Seiten der Platte unter Erweiterung nach außen öffnet, um schräge Peilungen zu optimieren.

4. System nach Anspruch 1, **dadurch gekennzeichnet, daß** die beiden Flächen der Scheibe (45) rückreflektierend sind oder eine rückreflektierende Beschichtung aufweisen.

5. System nach Anspruch 1, **dadurch gekennzeichnet, daß** das durch die Scheibe (45) hindurchgehende Loch (46) wenigstens einen kegelstumpfförmigen Bereich (461) aufweist, über den es sich unter Erweiterung nach außen öffnet, wobei die Neigung der Wand des kegelstumpfförmigen Bereichs in Bezug auf die Achse, auf die das Loch zentriert ist, im Bereich von etwa 35° bis etwa 45° liegt.

6. System nach Anspruch 1, **dadurch gekennzeichnet, daß** die Scheibe (45) sich auf einer kreisförmigen Erhöhung (47) einer Fläche des Kragens (42) erstreckt.

7. System nach Anspruch 1, **dadurch gekennzeichnet, daß** das Zielscheibenelement einen Körper (41) von allgemein zylindrischer Form aufweist, der mit dem Kragen verbunden und dazu angepaßt ist, in die Aufnahme (15) des Aufnahmekopfes (12) des Trägers (1) eingesteckt zu werden.

8. System nach Anspruch 1, **dadurch gekennzeichnet, daß** der Träger (1) einen Verankerungsfuß (11) aufweist, der dazu angepaßt ist, in einer Struktur verankert zu werden, an der metrologische Messungen vorgenommen werden sollen.

9. System nach Anspruch 1. **dadurch gekennzeichnet, daß** es ein Montageorgan (3) in der Form eines Ringes aufweist, der eine Mutter bildet und ein Innengewinde (31). das mit einem Außengewinde (14) des Aufnahmekopfes (12) des Trägers (1) zusammenwirkt, und eine innere Fläche (32) zum Spannen des Kragens gegen den Kopf (12) aufweist.

10. System nach Anspruch 1, **dadurch gekennzeichnet, daß** die Kugelfläche (44) zu einer Kugel gehört, die einen Durchmesser im Bereich von etwa 25 mm bis 35 mm hat.
